# FASCICULE DE BREVET EUROPEEN

(11) **EP 3 839 238 B1**
(45) Date de publication et mention de la délivrance du brevet: **02.10.2024**
(21) Numéro de dépôt: 20214711.2
(22) Date de dépôt: 16.12.2020
(51) Int. Cl.: F02K 1/34, F01N 1/02, F01N 13/00, G10K 11/16, G10K 11/172, F02K 1/04, F02K 1/82

(54) **CÔNE DE SORTIE D'UN ENSEMBLE PROPULSIF D'AÉRONEF FORMANT UN SYSTÈME DE TRAITEMENT ACOUSTIQUE À AU MOINS DEUX DEGRÉS DE LIBERTÉ**
AUSGANGSKONUS EINER ANTRIEBSEINHEIT EINES LUFTFAHRZEUGS, DER EIN AKUSTISCHES VERARBEITUNGSSYSTEM MIT MINDESTENS ZWEI FREIHEITSGRADEN BILDET
OUTLET CONE FOR AN AIRCRAFT PROPULSION ASSEMBLY FORMING AN ACOUSTIC PROCESSING SYSTEM WITH AT LEAST TWO DEGREES OF FREEDOM

(30) Priorité: 20.12.2019 FR 1915069
(43) Date de publication de la demande: 23.06.2021
(73) Titulaire: AIRBUS OPERATIONS (S.A.S.), 31060 Toulouse (FR)
(72) Inventeur: BROCHARD, Wolfgang, 31060 TOULOUSE Cedex 9 (FR); SABATHIER, Bastian, 31060 TOULOUSE Cedex 9 (FR); MERCAT, Florent, 31060 TOULOUSE Cedex 9 (FR)
(74) Mandataire: Sarraméa, Claude

(56) Documents cités:
- EP-A1- 2 013 466
- EP-A2- 2 407 659
- EP-A2- 2 551 507
- EP-B1- 2 013 466
- FR-A1- 2 445 895

## Description

La présente invention concerne le domaine des ensembles propulsifs d'aéronefs.

Les aéronefs commerciaux actuellement exploités sont propulsés à l'aide d'ensembles propulsifs, généralement implantés sous les ailes de l'aéronef ou en partie arrière de leur fuselage. Par aéronefs commerciaux, on entend notamment les aéronefs de transport de passagers ou de fret.

Les ensembles propulsifs employés dans les aéronefs commerciaux sont communément des turboréacteurs, et plus particulièrement des turboréacteurs à double flux.

Un tel ensemble propulsif comporte un moteur comportant une turbomachine et qui est installé dans une nacelle. La turbomachine entraîne généralement une soufflante située à l'admission (entrée d'air) de l'ensemble propulsif, le flux d'air admis pouvant être séparé en deux flux, à savoir un flux primaire qui est mélangé avec un carburant pour être enflammé et un flux secondaire qui contourne la turbomachine et est accéléré dans l'ensemble propulsif.

La combustion du mélange du flux primaire crée une pression en sortie de la turbine, la détente des gaz et leur accélération par effet venturi dans une tuyère située en sortie de l'ensemble propulsif générant l'énergie cinétique permettant la propulsion de l'aéronef. La tuyère comporte généralement une surface externe et un cône de sortie, formant une surface aérodynamique centrale participant à l'accélération des gaz en sortie de l'ensemble propulsif.

L'un des inconvénients des turboréacteurs est leur niveau d'émissions sonores. Pour réduire ces émissions sonores, il est connu de doter certaines surfaces internes de la nacelle, et certaines surfaces du carter de la turbomachine de revêtements ou panneaux permettant une absorption acoustique.

A titre d'exemple, un panneau ou revêtement acoustique classique comprend généralement un noyau en nid d'abeilles interposé entre une feuille perforée formant une première face et une feuille pleine obturant les cellules et formant une deuxième face du revêtement. Les cellules des panneaux acoustiques agissent comme de petits résonateurs dits « quart d'onde » permettant l'absorption des ondes acoustiques sur une plage de fréquence donnée. Rappelons qu'un résonateur quart d'onde correspond à une cavité dont une des trois dimensions est largement supérieure aux deux autres, et qu'il permet un amortissement de l'onde acoustique lors de sa propagation (unidirectionnelle) dans la cavité.

Pour qu'un résonateur soit efficace, sa plage de fréquence d'absorption doit comprendre la fréquence à laquelle le panneau est soumis. Or, les cavités de taille relativement réduite des panneaux acoustiques correspondent à des fréquences élevées.

Il est ainsi difficile d'obtenir un panneau alvéolaire efficace pour certaines applications soumises à des basses fréquences.

Or, les fréquences acoustiques générées par le moteur d'un aéronef s'étendent sur une plage assez large, incluant des basses fréquences qui ne sont pas atténuées par des revêtements acoustiques classiques (qui sont généralement efficaces sur des plages comprises entre 1000Hz et 5000hz, selon la hauteur des cellules). Les basses fréquences devant être atténuées sont par exemple les fréquences comprises entre 300 et 1000Hz selon le moteur considéré.

Pour le traitement acoustique des basses fréquences, il est connu d'utiliser des dispositifs présentant des cavités de grandes dimensions, du type désigné par l'expression anglophone « deep cavity » pour « cavité profonde », et qui s'apparentent ou correspondent à un résonateur de Helmholtz. On désigne dans l'ensemble de ce document, par dispositif du type résonateur de Helmholtz, les dispositifs acoustiques du type « deep cavity » ou résonateur à mode de cavité, qui comportent une cavité et généralement une restriction de passage à l'entrée de la cavité, et qui permettent un amortissement des ondes acoustiques selon un mode de propagation tridimensionnel des ondes dans la cavité (amortissement selon un mode dit de cavité).

Les revêtements acoustiques mettant en oeuvre cette technologie sont cependant complexes à fabriquer et à mettre en oeuvre au niveau de surfaces de dimensions restreintes ou de géométrie complexe.

Une insonorisation efficace des ensembles propulsifs d'aéronef constitue ainsi, de manière générale, une problématique importante.

Cette problématique est en outre renforcée par les derniers développements techniques et législatifs.

En effet, la tendance actuelle est à la baisse des émissions sonores admises par les normes d'émissions applicables aux aéronefs.

En outre, le diamètre des ensembles propulsifs tend à augmenter, pour augmenter leur taux de dilution (ratio massique entre le flux secondaire et le flux primaire), ce qui permet une meilleure efficacité énergétique du moteur. Il est envisagé par exemple des ensembles propulsifs à très fort taux de dilution, par exemple supérieur ou égal à quinze. De tels moteurs présentent une nacelle de plus grand diamètre que les diamètres des ensembles propulsifs employés à ce jour sur les aéronefs commerciaux, mais peut être plus court (selon sa dimension longitudinale correspondant à la direction générale du flux d'air qui le traverse) que les ensembles propulsifs employés à ce jour sur les aéronefs commerciaux. Cela réduit les surfaces disponibles pour traiter les émissions acoustiques, et l'adoption de groupes propulseurs de grand diamètre tend à faire baisser plus encore les fréquences des ondes acoustiques qu'ils génèrent, tandis que ces fréquences basses sont les plus complexes à traiter car la nécessité d'avoir des cellules de grand volume pour absorber des fréquences basses mène à des panneaux de grande épaisseur, peu compatibles d'une application aéronautique.

Si la surface externe d'une tuyère forme parfois une surface de traitement acoustique, seul un traitement acoustique au niveau de l'entrée de la tuyère est réalisé, comme le divulgue par exemple le document FR2914020.La présente invention vise à proposer un cône de sortie de tuyère permettant un traitement acoustique amélioré, notamment au vu de tout ou partie des problématiques évoquées ci-avant. EP2013466 A1 divulgue un cône de sortie d'un ensemble propulsif d'aéronef connu.

Ainsi, l'invention porte sur un cône de sortie d'un ensemble propulsif d'aéronef s'étendant selon une direction générale dite longitudinale et comportant une partie avant et une partie arrière. L'assemblage longitudinal desdites parties avant et partie arrière forme un système de traitement acoustique à au moins deux degrés de liberté. La formation d'un système acoustique à deux degrés de liberté permet de traiter des fréquences acoustiques sur différentes plages de fréquences ou sur une large plage de fréquences par recouvrement ou continuité des plages de fréquences traitées par le système acoustique.

La configuration en deux parties ou plus du cône de sortie est mise à profit pour constituer le système de traitement acoustique.

La partie avant comporte une portion longitudinale du cône présentant des surfaces courbées permettant, de l'avant vers l'arrière, un agrandissement suivi d'un début de restriction de la section transversale dudit cône, et la partie arrière est sensiblement conique ou tronconique.

Le système de traitement acoustique comporte un dispositif quart d'onde, comportant des alvéoles formant des résonateurs quart d'onde, et un dispositif du type résonateur de Helmholtz.

Le dispositif quart d'onde est formé dans la partie arrière. Le dispositif du type résonateur de Helmholtz est alors formé par l'assemblage desdites partie avant et partie arrière.

Le dispositif quart d'onde est formé en totalité dans la partie arrière et le dispositif du type résonateur de Helmholtz est formé en partie dans la partie avant et en partie dans la partie arrière, une portion d'au moins une cavité dudit dispositif du type résonateur de Helmholtz s'étendant à l'intérieur dudit cône sous le dispositif quart d'onde.

La partie avant comporte une surface résistive avant permettant l'entrée d'ondes acoustiques dans le dispositif du type résonateur de Helmholtz et la partie arrière comporte une surface résistive arrière permettant l'entrée d'ondes acoustiques dans le dispositif quart d'onde.

L'invention porte aussi sur un ensemble propulsif d'aéronef comportant un turboréacteur (3) comportant une tuyère comportant un cône de sortie (6) tel que précédemment décrit.

D'autres particularités et avantages de l'invention apparaîtront encore dans la description ci-après.

Aux dessins annexés, donnés à titre d'exemples non limitatifs :
[Fig. 1] la figure 1 représente, selon une vue schématique en trois dimensions, un ensemble propulsif d'aéronef ;
[Fig. 2] la figure 2 représente, selon une vue schématique en trois dimensions, une tuyère de sortie d'un ensemble propulsif d'aéronef correspondant à l'état de la technique ;
[Fig. 3] la figure 3 représente, selon une vue partielle schématique en coupe, un cône de sortie d'un ensemble propulsif d'aéronef ;
[Fig. 4] la figure 4 représente, selon une vue partielle schématique en coupe, une première variante d'un premier mode de réalisation, ne faisant pas partie de l'invention;
[Fig. 5] la figure 5 représente, selon une vue schématique tridimensionnelle en coupe, un cône de sortie d'un ensemble propulsif d'aéronef selon le mode de réalisation de la figure 4, ne faisant pas partie de l'invention;
[Fig. 6] la figure 6 représente, selon une vue partielle schématique en coupe, une deuxième variante du premier mode de réalisation ne faisant pas partie de l'invention;
[Fig. 7] la figure 7 représente, selon une vue partielle schématique en coupe, une première variante d'un deuxième mode de réalisation de l'invention ;
[Fig. 8] la figure 8 représente, selon une vue schématique tridimensionnelle en coupe, un cône de sortie d'un ensemble propulsif d'aéronef selon le mode de réalisation de la figure 7 ;
[Fig. 9] la figure 9 représente, selon une vue partielle schématique en coupe, une deuxième variante du deuxième mode de réalisation de l'invention ;
[Fig. 10] la figure 10 représente, selon une vue partielle schématique en coupe, un troisième mode de réalisation de l'invention ;
[Fig. 11] la figure 11 représente, selon une vue partielle schématique en coupe, une première variante d'un quatrième mode de réalisation ne faisant pas partie de l'invention ;
[Fig. 12] la figure 12 représente, selon une vue partielle schématique en coupe, une deuxième variante du quatrième mode de réalisation ne faisant pas partie de l'invention.

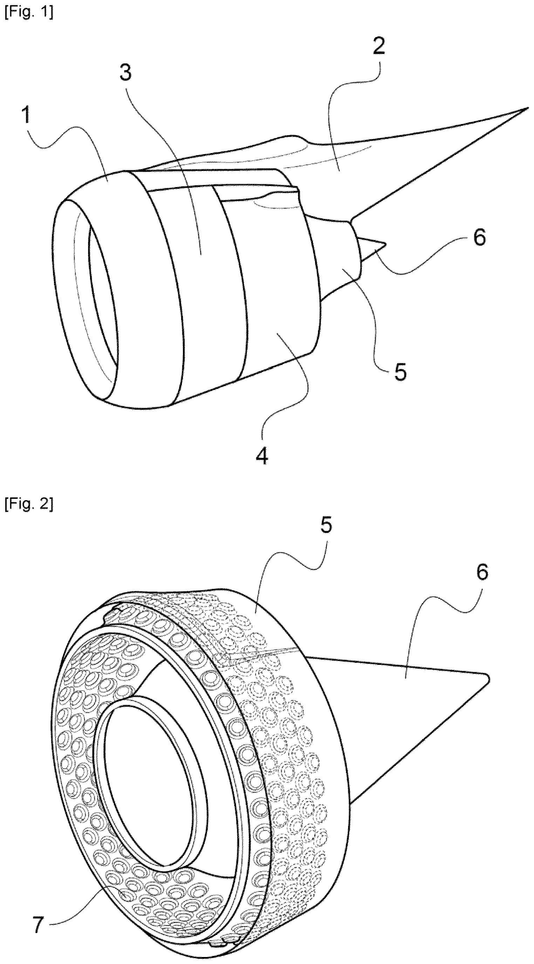

La figure 1 représente un ensemble propulsif d'aéronef d'un type connu et couramment utilisé pour la propulsion d'un aéronef commercial. L'ensemble propulsif représenté à titre d'exemple est destiné à une installation sous la voilure de l'aéronef, et comporte une nacelle 1 destinée à être liée à un aéronef par un mât de support 2. Dans la nacelle 1, un moteur est installé. Le moteur est une turbomachine, à savoir un turboréacteur 3, généralement du type à double flux. Dans ce cas, la tuyère comporte une tuyère secondaire 4, pour l'éjection du flux secondaire, et une tuyère primaire pour l'éjection du flux primaire du turboréacteur. La présente invention porte sur la tuyère primaire, qui est également désignée simplement « tuyère » dans le présent document. La tuyère comporte une surface externe 5 ou « nez » (« nozzle » en anglais), et un cône 6 (ou « plug » en anglais).

La tuyère (primaire) de sortie du turboréacteur est représentée plus en détail à la figure 2. Les gaz issus de la combustion se produisant dans le turboréacteur sont expulsés entre la surface externe 5 et le cône 6. Ces éléments sont configurés pour accélérer les gaz en sortie du moteur. Ceci est permis, notamment, par la section variable définie entre ladite surface extérieure 5 et la surface du cône 6 (convergent / divergent). Comme illustré à la figure 2, la surface extérieure 5, ou nez de la tuyère, peut être configurée pour constituer une surface de traitement acoustique, et comporter des alvéoles 7 permettant un amortissement des ondes acoustiques sur une plage de fréquences donnée.

Le cône 6 constitue quant à lui, selon l'état de la technique, une surface inexploitée ou exploitée de façon très basique pour la réduction des émissions acoustiques.

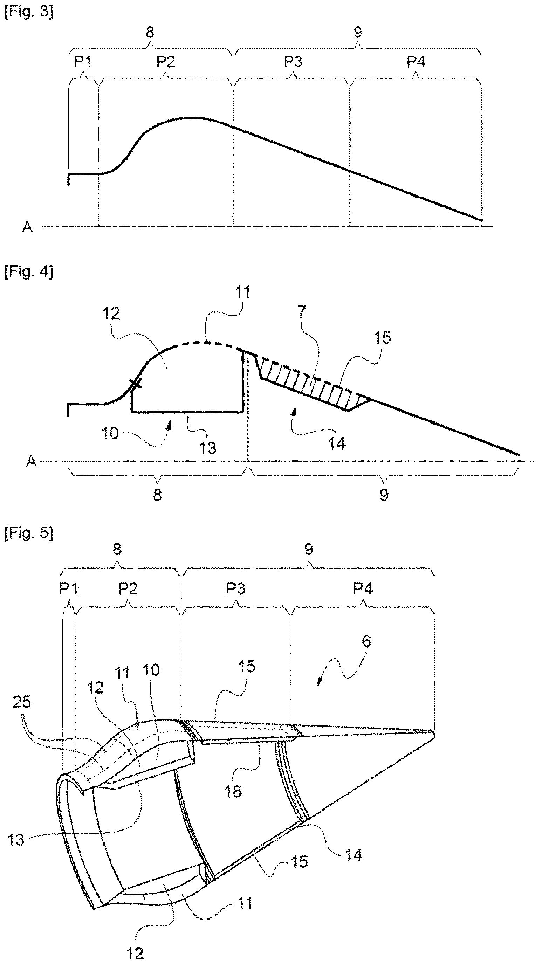

La figure 3 représente un cône 6 de sortie d'un ensemble propulsif d'aéronef, selon une demi-vue en coupe. La présente demi-vue comporte un axe A de symétrie qui est aussi l'axe de rotation, ou axe principal, autour duquel est développée la surface dudit cône.

Il est, de manière générale, possible de définir quatre portions longitudinales du cône 6.

Une première portion P1, située à l'avant du cône 6, correspond à la bride de fixation dudit cône 6 au moteur, c'est-à-dire au turboréacteur 3, qu'il équipe. Une deuxième portion P2 présente les surfaces courbées du cône qui forment un agrandissement suivi d'un début de restriction de la section transversale. La première portion P1 et la deuxième portion P2 forment une partie avant 8 du cône 6. Le reste du cône 6, de forme sensiblement conique ou tronconique, constitue une partie arrière 9 du cône 6. La partie arrière 9 peut être considérée comme l'aboutement d'une troisième portion P3 tronconique et d'une quatrième portion P4 dite cône arrière.

Chacune de ces portions peut être formée, optionnellement, par un composant physique distinct, ces composants étant liés entre eux par des liaisons circonférentielles adaptées.

Le cône objet de l'invention, dont plusieurs modes de réalisation sont présentés en référence aux figures suivantes, présente la particularité que l'assemblage de la partie avant 8 et de la partie arrière 9 forme un système de traitement acoustique à au moins deux degrés de liberté, c'est-à-dire ayant autant de modes et de fréquences propres que de degrés de liberté. Un tel système permet donc l'atténuation des ondes acoustiques sur plusieurs plages de fréquences, situées autour des fréquences propres du système. Cela permet de traiter plusieurs plages de fréquences disjointes, ou une large plage de fréquences par le traitement de plusieurs plages qui se recouvrent.

Du fait des fonctions respectives des portions du cône 6, les surfaces du cône pouvant être exploitées pour réaliser un traitement acoustique sont la deuxième portion P2 de la partie avant 8 et la troisième portion P3 de la partie arrière 9.

Ainsi, le cône 6 permet le traitement d'au moins deux plages de fréquences distinctes. Les plages de fréquences amorties par le cône 6 sont typiquement traitées par des dispositifs acoustiques différents, par exemple deux dispositifs respectivement de type quart d'onde et de type résonateur de Helmholtz.

Selon les technologies utilisées, les dispositifs acoustiques présents dans le cône peuvent être formés de manière monobloc ou en plusieurs pièces.

Les liaisons entre les portions du cône, et entre les dispositifs de traitement acoustique et le reste du cône peuvent être de divers types : épissures, liaisons rivetées, collées, soudées, par brasage, etc.

Les liaisons entre les éléments constitutifs des dispositifs acoustiques et les parois du cône 6 peuvent être réalisées par un joint d'étanchéité de type métallique ou céramique.

La figure 4 présente, selon une vue partielle en coupe similaire à celle de la figure 3, un cône de sortie d'un ensemble propulsif d'aéronef selon une première variante d'un premier mode de réalisation ne faisant pas partie de l'invention.

Selon ce premier mode de réalisation, la partie avant 8 et la partie arrière 9 du cône sont constituées de pièces distinctes aboutées.

La partie avant 8 comporte un dispositif de traitement acoustique de type résonateur de Helmholtz 10, permettant un amortissement des ondes acoustiques selon un mode de cavité. Pour cela, la partie avant 8 comporte une surface perforée ou plus généralement une surface résistive avant 11, permettant aux ondes acoustiques de pénétrer dans une cavité 12. La surface résistive avant peut, dans ce mode de réalisation et dans tout autre mode de réalisation, être formée d'une peau perforée. A titre d'exemple non limitatif, la peau perforée peut comporter des trous ayant un diamètre compris entre 0,3mm et 3mm. Elle peut présenter, également à titre d'exemple, un taux de surface ouverte compris entre 4% et 25% ; c'est à dire une surface ouverte comprise entre 4% et 25% de la surface totale perforée. La surface perforée peut s'étendre sur toute la surface aérodynamique ou être localisée de sorte qu'elle ne s'étend que partiellement sur la cavité 12 (« deep cavity ») du dispositif du type résonateur de Helmholtz. La surface résistive avant 11 est avantageusement ménagée dans la deuxième portion P2 longitudinale du cône 6. Une pluralité de cavités 12 de grandes dimensions (du type « deep cavity ») peut être formée tout autour du cône de sortie, c'est-à-dire autour de l'axe A. La formation de telles cavités bénéficie du fait qu'elles sont formées, en tout ou partie, dans la deuxième portion P2 où la section du cône 6 s'élargit.

Chaque cavité 12 est définie par la paroi externe du cône 6, et par une paroi interne 13 qui est rapportée et fixée dans ledit cône 6.

La partie arrière 9 comporte un dispositif de traitement acoustique quart d'onde 14. La partie arrière comporte une surface perforée ou plus généralement une surface résistive arrière 15, permettant aux ondes acoustiques de pénétrer dans les alvéoles 7 du dispositif quart d'onde 14. La surface résistive arrière peut être de même type que la surface résistive avant. La surface résistive arrière 15 est avantageusement ménagée dans la troisième portion P3 longitudinale du cône 6. Le revêtement acoustique comportant les alvéoles 7 permet une absorption des ondes acoustiques sur une plage de fréquences différentes, généralement sur des fréquences plus élevées, que celles de la plage traitée par le dispositif de type résonateur de Helmholtz 10 présent dans la partie avant 8.

La figure 5 représente le cône 6 selon le mode de réalisation de la figure 4. La figure 5 permet notamment de visualiser la maximisation des surfaces de traitement acoustique sur le cône 6, sur lequel seule la première portion P1 (bride de jonction au moteur) et la quatrième portion P4 (cône arrière) ne forment pas de dispositif de traitement acoustique. La figure 5 montre également les cloisons longitudinales 25 qui délimitent les cavités 12 du dispositif du type résonateur de Helmholtz. Dans l'exemple représenté, la troisième portion P3 est entièrement formée par le dispositif quart d'onde 14, de sorte que la peau arrière 18 du dispositif quart d'onde fait partie des brides permettant l'assemblage de la troisième portion P3 à la deuxième portion P2 d'une part, et à la quatrième portion P4 d'autre part.

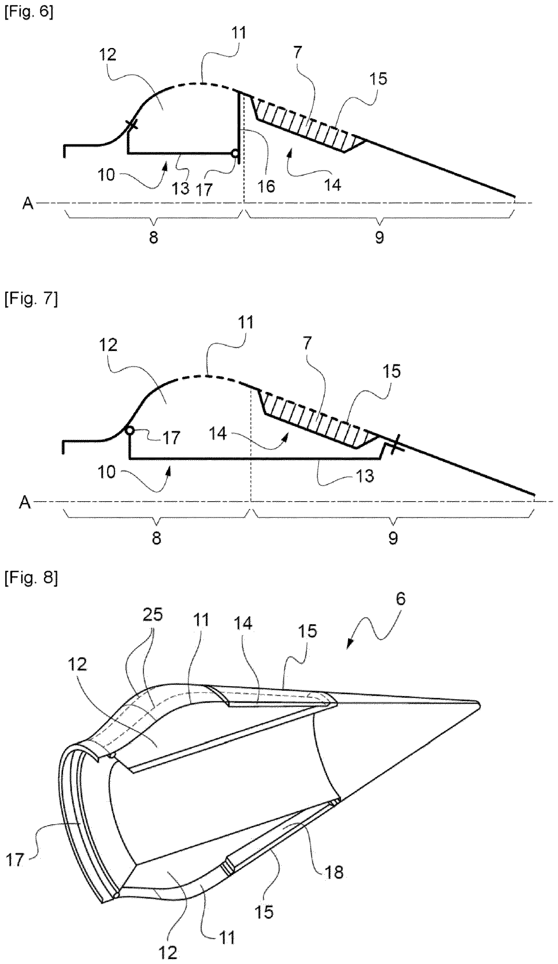

La figure 6 représente une deuxième variante du premier mode de réalisation ne faisant pas partie de l'invention et décrit en référence à la figure 4. Le mode de réalisation de la figure 6 diffère de celui de la figure 4 en ce que la paroi interne 13 définissant en partie la cavité 12 comporte une paroi interne radiale 16 qui fait partie de la partie arrière 9 du cône. Un joint 17 assure l'étanchéité entre la paroi interne radiale 16 et le reste de la paroi interne 13 qui fait partie de la partie avant 8 du cône 6. Le joint 17 peut notamment être un joint métallique ou céramique, adapté à résister aux hautes températures. Cette remarque au sujet du joint 17 concerne le présent mode de réalisation mais également tous les modes de réalisation de l'invention, notamment ceux décrits ci-après, mettant en oeuvre un tel joint. De même, un joint radial (non visible sur la figure 6, du fait du plan de coupe) assure l'étanchéité entre chaque cloison longitudinale 25 et la paroi interne radiale 16. C'est ainsi lors de l'assemblage entre la partie avant 8 et la partie arrière 9 que chaque cavité 12 du dispositif de traitement acoustique de type résonateur de Helmholtz 10 est formée. Cette variante peut simplifier la constitution de chacune des parties avant et arrière, et augmente le cas échéant le volume des cavités 12.

La figure 7 illustre un deuxième mode de réalisation, selon une première variante.

Comparativement au premier mode de réalisation, le dispositif du type résonateur de Helmholtz 10 s'étend non seulement dans la partie avant 8, mais également dans la partie arrière 9 du cône 6. La disposition et la constitution du dispositif quart d'onde 14 est identique à celle décrite pour le premier mode de réalisation, en référence aux figures 4 à 6. La surface résistive avant 11 débouchant dans la cavité 12 du dispositif du type résonateur de Helmholtz 10 peut être configurée comme dans le premier mode de réalisation. La cavité 12 s'étend quant à elle non seulement dans la partie avant 8 du cône 6, mais également dans la partie arrière 9, sous le dispositif quart d'onde 14.

Par « sous » le dispositif quart d'onde, on entend « plus à l'intérieur du cône », c'est-à-dire à plus grande proximité de l'axe A. Pour cela, la paroi interne 13 s'étend sous ledit dispositif quart d'onde 14, par exemple sensiblement parallèlement à l'axe A, et est fixée vers l'avant à la partie avant 8, et à l'arrière à la partie arrière 9 en arrière du dispositif quart d'onde 14. Plus précisément, dans l'exemple représenté, la paroi interne 13 fait partie de la partie arrière, et un joint 17 assure l'étanchéité entre la paroi intérieure 13 et la partie avant 8. Ainsi, la paroi interne 13 est liée à la partie arrière avant assemblage entre la partie avant 8 et la partie arrière 9 pour former le cône 6.

C'est ainsi lors de l'assemblage entre la partie avant 8 et la partie arrière 9 que chaque cavité 12 du dispositif de traitement acoustique de type résonateur de Helmholtz 10 est formée. Une configuration inverse (non représentée) est bien évidemment envisageable, c'est-à-dire avec une paroi interne 13 faisant partie de la partie avant, avant assemblage de ladite partie avant 8 et de la partie arrière, un joint pouvant assurer dans ce cas l'étanchéité entre ladite paroi interne 13 et la partie arrière 9.

Une telle configuration, selon le deuxième mode de réalisation, permet l'obtention d'une cavité 12 particulièrement longue, de grand volume, ce qui abaisse la plage de fréquences traitée.

La figure 8 représente le cône 6 selon le mode de réalisation de la figure 7, selon une vue analogue à celle de la figure 5. Dans le mode de réalisation représenté, la zone de jonction entre la quatrième portion P4 (cône arrière) et la troisième portion P3 du cône 6 est également une zone de jonction commune pour la partie arrière du dispositif quart d'onde 14 et pour l'extrémité arrière de paroi interne 13. La figure 7 montre également une configuration possible du joint 17, fixé à l'avant de la paroi interne 13 pour garantir l'étanchéité de la cavité 12 une fois celle-ci formée par assemblage de la deuxième portion P2 avec la troisième portion P3.

La figure 8 permet notamment de visualiser la maximisation des surfaces de traitement acoustique sur le cône 6, sur lequel seule la première portion P1 (bride de jonction au moteur) et la quatrième portion P4 (cône arrière) ne forment pas de dispositif de traitement acoustique. Dans l'exemple représenté, la troisième portion P3 est entièrement formée par le dispositif quart d'onde 14, de sorte que la peau arrière 18 du dispositif quart d'onde fait partie des brides permettant l'assemblage de la troisième portion P3 à la deuxième portion P2 d'une part, et à la quatrième portion P4 d'autre part.

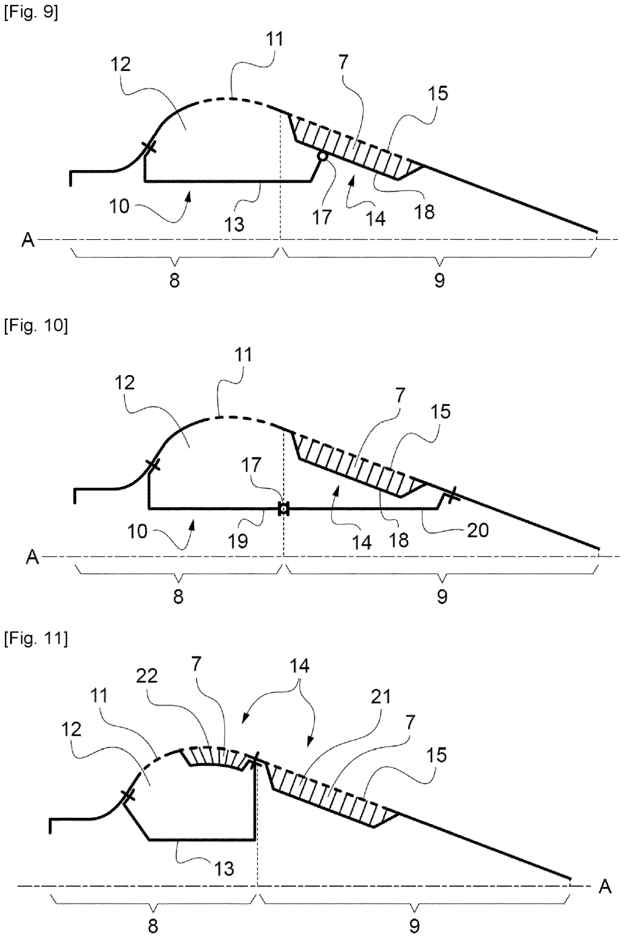

La figure 9 représente une deuxième variante du deuxième mode de réalisation. Tout comme dans la première variante, le dispositif du type résonateur de Helmholtz 10 s'étend non seulement dans la partie avant 8, mais également dans la partie arrière 9 du cône 6. Cette variante se distingue de celle de la figure 7 en ce que la paroi interne 13 n'est pas liée à la paroi du cône 6 en arrière du dispositif quart d'onde 14, mais est liée audit dispositif quart d'onde 14. Plus particulièrement, la paroi interne 13 fait partie de la partie avant 8 à laquelle elle est liée avant assemblage entre ladite partie avant 8 et la partie arrière 9 afin de constituer le cône 6. Un joint 17 assure l'étanchéité entre la paroi interne 13 et la partie arrière 9, à savoir entre la paroi interne 13 et la peau arrière 18 du dispositif quart d'onde 14. De même, un second joint (non visible sur la figure 6, du fait du plan de coupe) assure l'étanchéité entre chaque cloison longitudinale 25 et la partie arrière 9, à savoir entre chaque cloison longitudinale 25 et la peau arrière 18 du dispositif quart d'onde.

La figure 10 représente un troisième mode de réalisation de l'invention. Ce mode de réalisation comporte un dispositif de type résonateur de Helmholtz 10 et un dispositif quart d'onde pouvant être identique ou fortement similaire à ceux de la figure 7. En particulier, la cavité 12 du dispositif de type résonateur de Helmholtz 10 s'étend dans la partie avant 8 et dans la partie arrière 9 sous le dispositif quart d'onde 14.

Comparativement au mode de réalisation de la figure 7, la paroi interne formant (avec la paroi du cône et la peau arrière 18 du dispositif quart d'onde) la cavité 12 est formée en deux parties, à savoir une paroi interne avant 19 qui fait partie de la partie avant 8, et une paroi interne arrière 20 qui fait partie de la partie arrière 9.

L'extrémité libre à l'arrière de la paroi interne avant 19 peut être située sensiblement dans un même plan transversal (orthogonal à l'axe A) que l'extrémité arrière de la partie avant 8, et l'extrémité libre de la paroi interne arrière 20 peut être située sensiblement dans un même plan transversal que l'extrémité avant de la partie arrière 9, de sorte que lesdites paroi interne avant 19 et paroi interne arrière 20 sont aboutées dans ce plan lors de l'assemblage du cône 6. Un joint 17 est interposé entre lesdites paroi interne avant 19 et paroi interne arrière 20 pour assurer l'étanchéité à ce niveau de la cavité 12. Chaque paroi longitudinale 25 est avantageusement formée en deux parties, à savoir une paroi longitudinale avant formée dans la partie avant 8 et une paroi longitudinale arrière formée dans la partie arrière 9. Dans ce cas, un joint radial (non visible à la figure 10 du fait du plan de coup) est interposé entre chaque paroi longitudinale avant et la paroi longitudinale arrière correspondante.

Cette configuration offre une cavité 12 ayant un volume et en particulier une longueur importante. Elle offre également une constitution présentant des avantages logistiques, car aucune pièce n'est saillante longitudinalement des éléments constitutifs du cône avant assemblage. Elle offre enfin des avantages lors de l'assemblage du cône, toutes les lignes d'assemblage entre la partie avant 8 et la partie arrière 9 étant rassemblées dans un même plan.

La figure 11 représente une première variante d'un quatrième mode de réalisation ne faisant pas partie de l'invention.

Ce mode de réalisation est analogue à celui de la figure 1, dont il diffère essentiellement par la présence d'une partie du dispositif quart d'onde dans la partie avant 8. Le dispositif quart d'onde 14 comporte ainsi un premier ensemble de cellules 21 situé dans la partie arrière 9, tout comme dans les modes de réalisation précédemment décrits. Le dispositif quart d'onde 14 comporte en outre un deuxième ensemble de cellules 22 situé dans la partie avant 8. Les cellules du deuxième ensemble de cellules 22 peuvent être identiques ou différentes des cellules du premier ensemble de cellules 21. Notamment, les cellules du deuxième ensemble de cellules peuvent être de dimensions plus grandes ou moins grandes que celles du premier ensemble de cellules, afin de traiter respectivement des plages de fréquences plus basses ou plus élevées.

La surface résistive avant 11 peut être commune au deuxième ensemble de cellules 22 et à la cavité 12 et peut, dans ce cas, être plus étendue que la surface résistive avant des modes de réalisation précédemment décrits.

Le deuxième ensemble de cellules 22 peut être continu sur la circonférence du cône 6. Dans ce cas, les parois longitudinales 25 sont avantageusement fixées sur la peau arrière dudit deuxième ensemble de cellules 22. Le deuxième ensemble de cellules 22 peut, de manière alternative, être discontinu, et dans ce cas les parois longitudinales 25 peuvent fractionner ledit deuxième ensemble de cellules 22 et s'étendre jusqu'à la surface du cône 6.

La paroi interne 13 est liée à la paroi du cône 6 et/ou à la peau arrière du deuxième ensemble de cellules 22.

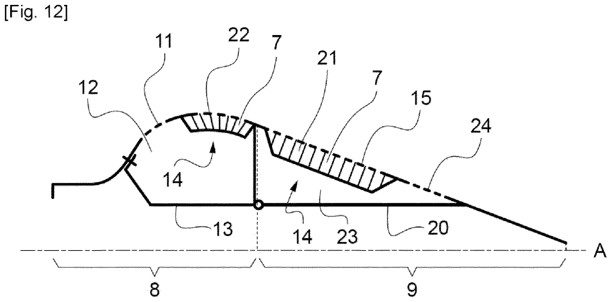

La figure 12 représente une deuxième variante du quatrième mode de réalisation ne faisant pas partie de l'invention.

Cette deuxième variante diffère de celle de la figure 11 en ce qu'un dispositif du type résonateur de Helmholtz est formé dans la partie arrière 9. A cette fin, une paroi interne arrière 20 faisant partie de la partie arrière 9 est fixé d'une part à la paroi du cône 6, en arrière du premier ensemble de cellules 21 et d'autre part à la paroi interne 13 qui forme une cavité 12 fermée dans la partie avant 8. Une seconde cavité 23 est ainsi formée dans la partie arrière 9. Les ondes acoustiques peuvent pénétrer dans cette seconde cavité 23 par une surface résistive additionnelle 24 formée en arrière de la surface résistive arrière 15, ou par toute autre ouverture vers l'extérieur du cône.

L'invention ainsi développée permet l'obtention d'un cône de sortie d'un ensemble propulsif d'aéronef offrant des propriétés acoustiques importantes. En particulier, grâce à la formation d'un système de traitement acoustique à plusieurs degrés de liberté, il est possible de traiter des plages de fréquences différentes, ce qui permet de traiter les émissions sonores de sources distinctes, ou encore d'obtenir un traitement acoustique sur une large plage de fréquences en configurant les différents dispositifs de traitement acoustique afin qu'ils traitent des plages de fréquences adjacentes ou se recoupant.

## Revendications

1. Cône de sortie d'un ensemble propulsif d'aéronef s'étendant selon une direction générale dite longitudinale et comportant une partie avant (8) et une partie arrière (9),
dans lequel l'assemblage longitudinal desdites parties avant (8) et partie arrière (9) forme un système de traitement acoustique à au moins deux degrés de liberté , dispositif quart d'onde (14) est formé en totalité dans la partie arrière (9) et un dispositif du type résonateur de Helmholtz (10) est formé en partie dans la partie avant (8) et en partie dans la partie arrière (9), une portion d'au moins une cavité (12) dudit dispositif du type résonateur de Helmholtz (10) s'étendant à l'intérieur dudit cône sous le dispositif quart d'onde, chaque cavité (12) étant définie par la paroi extérieure (6) du cône et par une paroi (13) interne, la paroi (13) interne étant liée à la paroi du cône (6) en arrière du dispositif quart d'onde ou au dispositif quart d'onde et vers l'avant à la partie avant (8), chaque cavité (12) s'étendant ainsi non seulement dans la partie avant (8) mais également dans la partie arrière (9), le cône de sortie **caractérisé en ce que** la partie avant comporte une portion longitudinale du cône présentant des surfaces courbées permettant, de l'avant vers l'arrière, un agrandissement suivi d'un début de restriction de la section transversale dudit cône, et **en ce que** la partie arrière est sensiblement conique ou tronconique.

2. Cône de sortie d'un ensemble propulsif d'aéronef selon la revendication 1, dans lequel le dispositif quart d'onde (14), comporte des alvéoles (7) formant des résonateurs quart d'onde.

3. Cône de sortie d'un ensemble propulsif d'aéronef selon l'une des revendications 1 ou 2, dans lequel la partie avant (8) comporte une surface résistive avant (11) permettant l'entrée d'ondes acoustiques dans le dispositif du type résonateur de Helmholtz (10) et la partie arrière (9) comporte une surface résistive arrière (15) permettant l'entrée d'ondes acoustiques dans le dispositif quart d'onde (14)

4. Ensemble propulsif d'aéronef comportant un turboréacteur (3) comportant une tuyère comportant un cône de sortie (6) selon l'une des revendications précédentes.

## Patentansprüche

1. Austrittskonus einer Antriebseinheit eines Luftfahrzeugs, der sich in einer Längsrichtung genannten allgemeinen Richtung erstreckt und einen vorderen Teil (8) und einen hinteren Teil (9) umfasst, wobei durch den Zusammenbau des vorderen Teils (8) und des hinteren Teils (9) in Längsrichtung ein akustisches Verarbeitungssystem mit mindestens zwei Freiheitsgraden gebildet wird, eine Viertelwellenvorrichtung (14) vollständig im hinteren Teil (9) gebildet wird und eine Vorrichtung vom Typ eines Helmholtz-Resonators (10) teilweise im vorderen Teil (8) und teilweise im hinteren Teil (9) gebildet wird, wobei ein Abschnitt mindestens eines Hohlraums (12) der Vorrichtung vom Typ eines Helmholtz-Resonators (10) sich im Inneren des Konus unter der Viertelwellenvorrichtung erstreckt, wobei jeder Hohlraum (12) durch die Außenwand (6) des Konus und durch eine Innenwand (13) definiert ist, wobei die Innenwand (13) mit der Wand des Konus (6) hinter der Viertelwellenvorrichtung oder mit der Viertelwellenvorrichtung und vorn mit dem vorderen Teil (8) verbunden ist, wobei sich jeder Hohlraum (12) somit nicht nur im vorderen Teil (8), sondern auch im hinteren Teil (9) erstreckt, wobei der Austrittskonus **dadurch gekennzeichnet ist, dass** der vordere Teil einen Längsabschnitt des Konus umfasst, der gekrümmte Flächen aufweist, die, von vorn nach hinten, eine Vergrößerung, gefolgt vom Beginn einer Verminderung des Querschnitts des Konus ermöglichen, und dadurch, dass der hintere Teil im Wesentlichen kegelförmig oder kegelstumpfförmig ist.

2. Austrittskonus einer Antriebseinheit eines Luftfahrzeugs nach Anspruch 1, wobei die Viertelwellenvorrichtung (14) Zellen (7) umfasst, welche Viertelwellenresonatoren bilden.

3. Austrittskonus einer Antriebseinheit eines Luftfahrzeugs nach einem der Ansprüche 1 oder 2, wobei der vordere Teil (8) eine vordere resistive Fläche (11) umfasst, die den Eintritt von Schallwellen in die Vorrichtung vom Typ eines Helmholtz-Resonators (10) ermöglicht, und der hintere Teil (9) eine hintere resistive Fläche (15) umfasst, die den Eintritt von Schallwellen in die Viertelwellenvorrichtung (14) ermöglicht.

4. Antriebseinheit eines Luftfahrzeugs, welche ein Turbostrahltriebwerk (3) umfasst, das eine Düse umfasst, die einen Austrittskonus (6) nach einem der vorhergehenden Ansprüche umfasst.

## Claims

1. Exhaust cone for an aircraft propulsion system extending in a general direction called the longitudinal direction and comprising a front portion (8) and a rear portion (9), in which the longitudinal assembly of said front portion (8) and rear portion (9) forms an acoustic treatment system having at least two degrees of freedom, a quarter-wave device (14) is formed entirely in the rear portion (9) and a Helmholtz-resonator device (10) is formed partly in the front portion (8) and partly in the rear portion (9), one portion of at least one cavity (12) of said Helmholtz-resonator device (10) extending into said cone under the quarter-wave device, each cavity (12) being defined by the outer wall (6) of the cone and by an inner wall (13), the inner wall (13) being joined to the wall of the cone (6) behind the quarter-wave device or to the quarter-wave device and at the front to the front portion (8), each cavity (12) thus extending not only into the front portion (8) but also into the rear portion (9), this exhaust cone being **characterized in that** the front portion comprises a longitudinal segment of the cone having curved surfaces allowing, from front to rear, an enlargement followed by initial narrowing of the cross section of said cone, and **in that** the rear portion is substantially conical or frustoconical.

2. Exhaust cone for an aircraft propulsion system according to Claim 1, wherein the quarter-wave device (14) comprises cells (7) forming quarter-wave resonators.

3. Exhaust cone for an aircraft propulsion system according to either of Claims 1 and 2, wherein the front portion (8) comprises a front resistive surface (11) allowing acoustic waves to enter into the Helmholtz-resonator device (10) and the rear portion (9) comprises a rear resistive surface (15) allowing acoustic waves to enter into the quarter-wave device (14).

4. Aircraft propulsion system comprising a turbine engine (3) comprising a duct comprising an exhaust cone (6) according to one of the preceding claims.
